# EUROPEAN PATENT APPLICATION

(11) **EP 4 428 526 A1**
(43) Date of publication of application: **11.09.2024**
(21) Application number: 23160358.0
(22) Date of filing: 07.03.2023
(51) Int. Cl.: G01N 21/64, G01N 21/27

(54) **TEST PLATE FOR IMMUNOASSAY READER**

(71) Applicant: MABTECH AB, 131 28 Nacka Strand (SE)
(72) Inventor: Larsson, Jesper, 131 28 Nacka Strand (SE); Brandt, Ludwig, 131 28 Nacka Strand (SE); Sparring, Leonard, 131 28 Nacka Strand (SE); Sköldström, Pontus, 131 28 Nacka Strand (SE); Smit, Deon, 131 28 Nacka Strand (SE)
(74) Representative: EIP

(57) **Abstract**

A system (100) for detecting spots in a substrate, as well as a test plate (200) for such a system, are disclosed. The system comprises illumination means (110) for illuminating the substrate, detection means (120) for detecting photons emitted or reflected from the substrate, and processing means (130) for detecting the spots based on the detected photons. The test plate comprises a first test structure (210) with a fluorescent material and a second test structure (220) with a pattern of features defining a first area (222) with relatively high photon reflection or fluorescence and a second area (221) with relatively low photon reflection or fluorescence. The processing means (130) is configured to determine a parameter indicating an intensity of the illumination as well as a parameter indicating a focus level of the detection means based on detected photons emitted or reflected from the test structures (210, 220).

## Description

### Technical Field

The present invention relates to investigative techniques such as assays, and more specifically to immunoassays such as the Enzyme-Linked ImmunoSpot (ELISpot) and the FluoroSpot assays. The present invention also relates to a test plate to be used in an ELISpot or FluoroSpot reader.

### Background

The ELISpot assay and the FluoroSpot assay are immunoassays that are used to measure the secretion of specific proteins, such as antibodies or cytokines, at the single cell level. These assays are commonly used in immunological research and vaccine development to monitor specific immune responses.

Generally, these assays employ antigen-specific capture antibodies to bind protein secreted from the sample cells. Subsequent steps of the assays include the formation of an insoluble precipitate (ELISpot assay) or the use of fluorophore-labelled antibodies (FluoroSpot assay) to indicate presence of the secreted protein. The design of the ELISpot and FluoroSpot assays are known per se, and for the purpose of the present disclosure it can be concluded that the 'spots' formed by the precipitate or by the fluorescence signal emitted by the fluorophores, can be investigated by optical means of a spot reader, also referred to as a `reader', to detect and quantify the presence of the analyte. The spots can hence be seen as footprints of the secreting cells.

Calibration, quality control (QC) and performance qualification (PQ) are examples of processes used to validate that an instrument, such as an ELISpot or FluoroSpot reader, is functioning properly and performing according to its specifications. These processes typically involve conducting a series of quantitative and qualitative tests to detect incorrect or inconsistent operation of the reader.

There is however a need for improved and more efficient techniques for investigating the performance of the reader.

### Summary

According to a first aspect of the present invention, there is provided a system for detecting spots in a substrate, wherein the spots indicate analyte-secreting cells in a sample. The system comprises illumination means for illuminating the substrate, detection means for detecting photons emitted or reflected from the illuminated substrate, and processing means which are coupled to the detection means and configured to detect the spots in the substrate based on the photons detected by the detection means. Further, a test plate, also referred to as calibration plate, quality control plate, or performance qualification plate, is provided, which is configured to be illuminated by the illumination means to allow a performance of the system to be determined. The test plate comprises a first test structure with a fluorescent material configured to emit photons in response to the fluorescent material being illuminated by the illumination means, and a second test structure comprising a pattern defining a first area with relatively high photon reflection or fluorescence and a second area with relatively low or no photon reflection or fluorescence when illuminated by the illumination means. The processing means is configured to determine a parameter indicating an intensity of the illumination means based on detected photons emitted by the fluorescent material and to determine a parameter indicating a focus level of the detection means based on detected photons reflected or emitted by the pattern, as well as on a transition between the first area and the second area.

According to a second aspect, there is provided a test plate for determining a performance of a device for detecting spots in a substrate, wherein the spots indicate analyte-secreting cells of a sample. The device comprises illumination means for illuminating the substrate, detection means for detecting photons emitted or reflected from the substrate, and a processing means coupled to the detection means, wherein the processing means is configured to detect the spots in the substrate based on the photons detected by the detection means. The test plate comprises a first test structure comprising a fluorescent material configured to emit photons in response to the fluorescent material being illuminated by the illumination means, thereby allowing the processing means to determine a parameter indicating an intensity of the illumination means, and a second test structure comprising a pattern of features defining a first area with relatively high photon reflection or fluorescence and a second area with relatively low or no photon reflection or fluorescence in response to the pattern being illuminated by the illumination means, thereby allowing the processing means to determine a parameter indicating a focus level of the detection means based on detected photons reflected or emitted by the pattern, as well as on a transition between the first area and the second area.

Calibration, quality control (QC) and performance qualification (PQ) may be understood as examples of processes used to ensure that a device, such as above-mentioned reader for detecting spots in the ELISpot or FluoroSpot assays, is functioning properly and consistently. These processes may in the present disclosure simply be referred to as 'tests'. The test plate, which is a subject of the present disclosure, may be used in a calibration process, a quality control process, and in a performance qualification process, and may hence be referred to as a calibration plate, a quality control plate or a performance qualification plate. These terms may be used interchangeably throughout the present disclosure.

While the calibration process as well as the performance qualification and quality control processes involve testing and evaluation of the performance of the reader, they may be understood as having different goals and focus on different aspects of the reader's performance. Calibration is commonly referred to as the process of adjusting the reader to a known standard or reference. It involves comparing the measurement or output of the reader to a known standard and adjusting the reader as necessary to ensure that it is producing accurate and precise measurements. Quality control may be understood as the process by which the manufactured reader is tested to ensure that it meets the standard. Calibration and quality control are typically performed in connection with manufacturing or upon installation of a reader. Performance qualification, on the other hand, is commonly understood as the process of ensuring that the reader performs according to its intended specifications and meets the requirements of its intended use. It may involve testing the reader regularly to ensure that it functions properly and consistently over time.

Calibration, quality control and performance qualification typically involve testing the reader under operating conditions similar or equivalent to those that would be found during actual use of the reader. A common method is therefore to run a series of tests on a reference plate having a pattern of spots similar to the one that would be found on an actual experimental plate. The output, which typically would be a number of detected spots, is monitored and any deviations from the specified performance criteria or over time are documented.

The present invention is based on the realisation that a more efficient test processes can be obtained if the performance of the illumination means and the performance of the detection means are verified separately, using the same test plate. The inventors have realised that illumination and focus are important factors affecting the result of the quantification and/or qualification of spots on a sample plate. While a deviation in the detected number of spots may not give any information indicating the underlying reason for the deviation, a monitored illumination intensity or focus level may indicate whether the cause of the deviation is to be found in the illumination means or the detection means. In other words, the present invention allows for a more precise testing of the reader and, possibly, a simplified trouble shooting process, especially compared to prior art processes focusing on counting and monitoring the number of spots detected on a reference plate.

In addition, the present invention beneficially allows for validation of positioning means of the reader. The positioning means may for example comprise an XY stage for controlling movement and position accuracy of the test plate in relation to the illumination and/or detection means. By observing the position of a reference structure on the test plate, such as a fiducial marker or a well, positioning errors and drifts may be detected. Hence, the test plate may also be used for calibration, performance qualification and quality control of the positioning means.

The test plate may comprise a plurality of wells, and may hence be formed of, or similarly configured as, a multi-well plate commonly associated with the ELISpot or FluoroSpot assays. In this case, the first and second test structures may be arranged at a bottom of a respective well, thereby allowing for the first and second test structures to be optimised for their respective purpose - i.e., for the first test structure to provide an as good fluorescence signal as possible and the second test structure to provide an as good focus level signal as possible. The bottom of a first one of the wells may for example be fully covered by the fluorescent material to increase the fluorescence signal, whereas another one of the wells may comprise a test pattern with relatively sharp edges or transitions between highly reflecting/fluorescent areas and areas with relatively low reflection/fluorescence.

Alternatively, the first and the second test structures may be arranged in a common well, which beneficially allows for both the illumination intensity and the focus level to be retrieved from the same reading or location on the plate. In some examples, the test structures may be integrated with each other such that the fluorescent material of the first test structure is provided in a pattern forming the second test structure. As a result, the fluorescent light emitted by the first test structure may also comprise a pattern that can be used for focus level measurements.

According to an embodiment, the processing means is configured to determine the parameter indicating the intensity of the illumination means by comparing an intensity of photons emitted by the fluorescent material with a reference value. The reference value may for example be a predetermined, possibly fixed, reference value defined by a party such as the manufacturer of the reader, a service technician, or an operator of the reader. Alternatively, the reference value may be calculated, preferably automatically, by reader software based on input parameters such as type of assay, material of the test plate, type of analyte, etc. A lookup table may for example be employed in the calculations, mapping input parameters to output values indicating suitable intensity values. In further examples, the reference value is based on a previous measurement, or a series of previous measurements, which thus may be monitored to detect drifts or deviations over time.

In an example, the processing means is configured to generate an alarm signal in response to a detected difference exceeding a predetermined threshold. The difference may be determined by comparing the intensity of the photons emitted by the fluorescent material with the reference value, such as a predefined reference value or a previous measurement.

It will be understood that the term `illumination means' generally refers to an element including one or several light sources, such as at least one of a Light Emitting Diode (LED), a halogen light source, xenon light source, a laser light source, and the like. The present invention beneficially provides a means for detecting a deviation in the illumination generated by such light sources, such as a gradual fading of the light source, causing the illumination intensity to eventually fall below the acceptable range.

The focus level may be understood as to what degree (if any) the spots are out of focus of the detection means. Preferably, the focus plane of the detection means coincides with the plane in which the spots (i.e., the precipitate or fluorophores) are arranged. This may be understood as a satisfactory or good focus. Any separation between the two may be considered undesirable and associated with the focus being off, that is, the spots being out of focus. A poor focus risks making the spots difficult, or even impossible, for the reader to detect. It is hence desirable to determine the focus level, or at least monitoring any changes in the focus level over time, to detect conditions at which the performance of the reader is at risk.

According to an embodiment, the processing means is configured to determine the parameter indicating the focus level of the detection means by measuring to what degree the intensity variation between neighbouring pixels is affected when a blur filter is applied to an image. A blur algorithm may be employed to compare how the intensity variation between neighbouring pixels decreases after the blur filter is applied to the original image to calculate a sharpness value. Out of focus images will be less affected by the blur filter and receive a lower blur metric compared to sharp images with good focus, for which the blur metric is high. The use of a blur metric to quantify the blur effect is described by for example F. Crete et al. in The Blur Effect: Perception and Estimation with a New No-Reference Perceptual Blur Metric In Proceedings of SPIE - The International Society for Optical Engineering, March 2007.

According to an embodiment, the processing means may further be configured to generate an alarm signal, should a difference between the measured blur metric and a reference value exceed a predetermined threshold. It will be appreciated that the predetermined threshold may, similar to what is described above, be a predefined reference value, calculated based on input parameters, or a previous measurement.

The determination of focus level may be particularly beneficial in embodiments wherein the detection means is of a fixed-focus type, that is, a system in which the position of the lens is not adjustable and cannot be adjusted during regular operation of the reader. This type of system may advantageously be used in readers wherein the focus distance is known in advance and focus is adjusted upon installation or assembly. For such systems, which lack the capability of easily adjusting the focus level during use, it may be particularly useful to verify the focus level on a regular basis to ensure that there has not been a drift or mechanical distortion along the optical path. Should the processing of the signal from the second test structure indicate a poor performance in terms of focus level, a service process may be initiated to readjust the focus level of the detection means and ensure a proper performance of the reader.

The first test structure may be configured to allow for multiple light sources of the illumination means to be verified, wherein the light sources may differ in terms of wavelength ranges of the generated light. A first one of the light sources may thus be configured to emit light in a first wavelength range, whereas a second one of the light sources may be configured to emit light in a second wavelength range, different from the first one. The performance of each of the light sources may be determined by studying the intensity of fluorescent light emitted from the first test structure as it is being illuminated by each of the light sources. Preferably, the first test structure may comprise at least two different regions configured to emit photons in different wavelength ranges. A first one of the regions may thus be configured to emit light in a wavelength range that differs from the wavelength range of the light emitted by the second region. Further, the fluorescent material of each of the regions may be selected to favour fluorescence in response to being illuminated by light of wavelengths associated with the respective light source, such that a first one of the regions comprises a fluorescent material adapted to emit light in response to being illuminated by the first light source, and such that a second one of the regions comprises a fluorescent material adapted to emit light when illuminated by the second light source. In this way, the fluorescent response from a first and a second light source may be tested separately by means of the first and second region, respectively.

The first and second regions, emitting light in a respective wavelength range, may in some examples be arranged in separate wells of a multi-well test plate. Hence, the first region may be arranged at the bottom of a first one of the wells and the second region arranged at the bottom of a second one of the wells, different from the first one.

Alternatively, the same test structure, or region, may be used to verify the performance of two or more light sources emitting light of different wavelength ranges. This may be achieved by using a fluorescent material that is capable of being excited, and hence generate a fluorescent response, by the light emitted by each of the two or more light sources. In different words, it will be appreciated that a test structure, or region, may not necessarily be limited to verification of a single light source and a single wavelength range. On the contrary, the same fluorescent material may be employed to verify multiple light sources of multiple colours.

The pattern of the second test structure may preferably be designed to provide a test structure with sharp transitions and high contrast between bright and dark areas as it is being illuminated by the illumination means. Such a pattern may for instance be achieved by a mask with open regions exposing an underlying fluorescent material to the illumination. The mask may preferably be configured to block the light in regions other than the open ones, so as to promote high contrast between the exposed, underlying regions and the masked portions when imaged by the detection means. In further examples, the pattern may be formed by white reflective features arranged on a low reflective black background, or black features arranged on a white reflective background, to increase the contrast between 'white' and `black' pixels in the image of the test pattern. The open regions or features may have a circular shape to resemble the spots of an actual, experimental plate.

In a further aspect, a method is provided in which the performance of a system or reader according to the first aspect is evaluated. The method comprises inserting a test plate according to the second aspect into the reader and illuminating a first and a second test structure of the test plate by the illumination means. Photons emitted from the first test structure and reflected or emitted from the second test structure in response to the illumination are detected by the detection means, and the resulting signals generated by the detection means processed by the processing means to determine a parameter indicating an intensity of the illumination means and a focus level of the detection means, respectively.

In yet another aspect, embodiments of the present disclosure provide a software product stored on a machine-readable non-transitory (non-transient) data storage media, wherein the software product is executable upon computing hardware for implementing the aforementioned method. In other words, the present disclosure provides a computer program product comprising a non-transitory computer-readable storage medium having computer-readable instructions stored thereon, the computer-readable instructions being executable by a computerised device comprising processing hardware to execute a method for testing a reader as discussed above.

The term 'spot' may be understood differently depending on the type of assay. For an ELISpot assay, the spots are commonly formed by insoluble precipitate that is visible to a camera and which can be analysed using image processing techniques. In a FluoroSpot assay, a light signal emitted from a fluorophore is captured by the detection means and interpreted as a 'spot' in the resulting image. In both example assays, the images (and corresponding 'spots') are analysed in an image analysis process.

A substrate is generally understood as a substance or layer in (or on) which the spots are arranged. The substrate may also be referred to as a 'membrane'. In case of the ELISpot assay, the precipitate forming the spots is formed in the membrane (the substrate). In case of the FluoroSpot assay, the fluorophore spots are formed in the membrane.

The major cell types of interest are leucocytes, especially lymphocytes, but in essence any cell that secretes analyte can be used in these assays.

The terms `processing means' or `processing circuit' may herein encompass a processing unit, comprising e.g. one or more processors, an Application Specific Integrated Circuit (ASIC), a Field-Programmable Gate Array (FPGA) or the like. The processing means may also be referred to as a controller.

Further features and advantages of the invention will become apparent from the following description of preferred embodiments of the invention, given by way of example only, which is made with reference to the accompanying drawings.

### Brief Description of the Drawings

Figure 1 is a schematic outline of a system according to an embodiment of the present invention.
Figure 2 shows a top view of a test plate according to an embodiment of the present invention.
Figures 3a-b are top views of test plates according to some embodiments of the present invention.
Figure 4 illustrate a top view of a first test structure comprising two different fluorescent materials according to an embodiment of the present invention.
Figure 5 is a cross sectional side view of a multi-well test plate according to an embodiment of the present invention.
Figure 6a is a top view of a second test structure according to an embodiment of the present invention, comprising pattern features arranged on a background.
Figure 6b is a cross sectional sideview of the second test structure shown in figure 6a.
Figure 7 is a flow chart schematically illustrating a performance qualification process performed on a reader using a test plate according to an embodiment of the present invention.

### Detailed Description

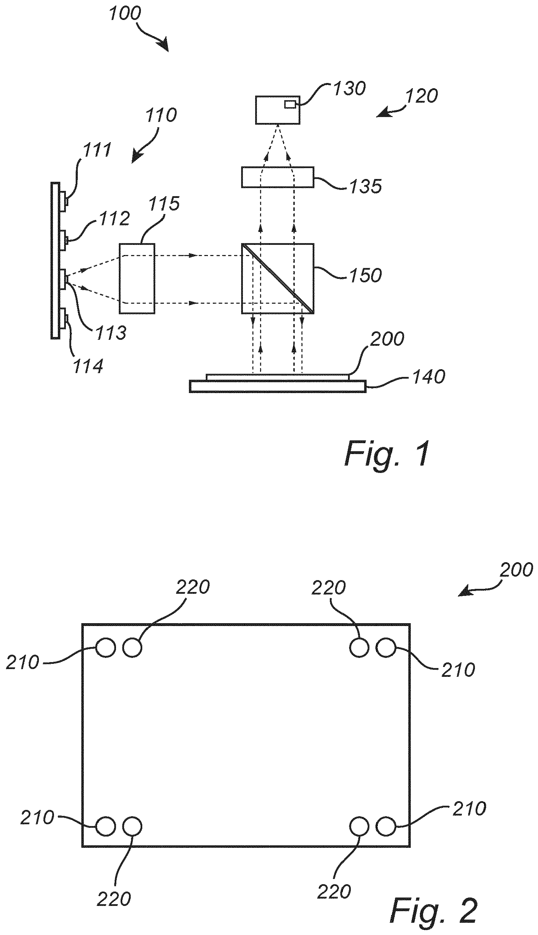

Figure 1 is a schematic outline of a system 100 according to an embodiment of the present invention. The system 100 is configured for detection of spots in a substrate, wherein the spots indicate analyte-secreting cells of a sample according to established immunoassays such as the FluoroSpot assay. It will however be appreciated that the inventive concept is not necessarily limited to the FluoroSpot assay. On the contrary, the concept of using the inventive test plate of the present disclosure may as well be used for calibration, quality control, or performance qualification of the Enzyme-Linked ImmunoSpot (ELISpot) assay, or other assays involving quantification or qualification of spots and other visible features formed in a substrate. Further, it should be noted that a system 100 such as the one depicted in figure 1 also may be referred to as a `reader', capable of 'reading' the spots on the substrate. Hence, in preferred examples the outlined system 100 may represent a FluoroSpot reader.

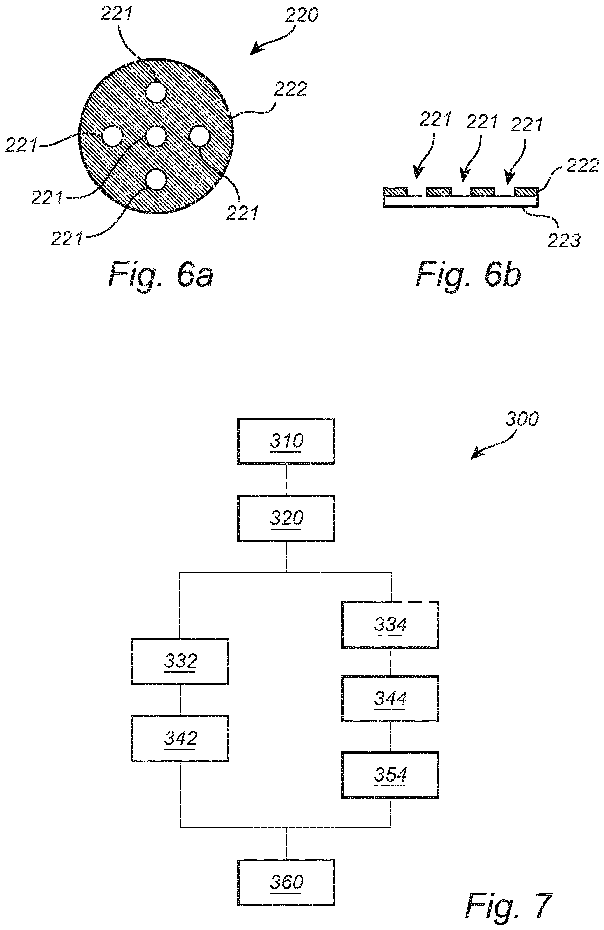

As indicated in the present figure, the system 100 comprises illumination means 110 for illuminating the substrate, detection means 120 for detecting photons emitted or reflected from the illuminated substrate, and processing means 130 coupled to the detection means 120 and configured to detect the spots in the substrate based on the photons detected by the detection means 120. The detection means 120 generally converts received photons into an electric signal that can be processed by the processing means 130. In the present figure, the substrate has been replaced with a test plate 200 for performing a test procedure, such as a calibration, a quality control, or a performance qualification process of the system 100. Details of the test plate 200 will be discussed in connection with figures 2-6 and examples of processing of the signal output from the detection means discussed with reference to figure 7.

The illumination means 110 may comprise one or several light sources, such as LEDs. The illumination means may, for example, comprise a plurality of light sources 111-114 of different colour for illuminating wells when running a FluoroSpot assay, as well as a white ring LED (not shown) used to illuminate wells when running an ELISpot assay.

In the present, non-limiting example, the illumination means 110 comprises four different light sources suitable for the FluoroSpot assay: a first LED 111 emitting light with the intensity peaking at wavelengths around 380 nm, a second LED 112 emitting light with peak intensity at wavelengths around 490 nm, a third LED 113 emitting light with peak intensity at wavelengths around 550 nm, and a fourth LED 114 emitting light with peak intensity at wavelengths around 640 nm. During operation, these LEDs may be used to generate short light pulses exciting fluorophores that emit light with spectrums peaking at 430 nm (DAPI equivalent), 510 nm (FITC equivalent), 570 nm (Cy3 equivalent) and 660 nm (Cy5 equivalent), respectively.

It is therefore of interest to validate that the performance of the illumination means 110, such as the white ring LED or the plurality of LEDs, is the same and consistent over time, using the test plate 200 according to the present invention.

The illumination means 110 may further comprise means 115 for forming the light along the optical path (indicated by the dashed lines). Examples of such means include optical filters for affecting the wavelength of the light reaching the test plate, as well as collimation arrangements and lens arrangements for collimating and shaping the light reaching the test plate 200.

It will be appreciated that the type and number of light sources may vary depending on the application and type of assay. An ELISpot reader may for example comprise a single light source, such as white ring light arranged above the test plate 200, whereas a FluoroSpot reader may comprise a plurality of light sources for generating light in different wavelength ranges exciting different types of fluorophores, as illustrated in figure 1. It will be appreciated that a FluoroSpot reader may comprise a light white source as well, such as the white ring light discussed above.

The light emitted by the illumination means 110 is directed onto the test plate 200 to allow light to be emitted or reflected from a test structure of the test plate 200. The emitted or reflected light may then be captured by the detection means 120. The light from the illumination means 110 may be directed to the test plate 200 via a beam splitter 150, also referred to as a filter cube, positioned on an optical path of the generated light. In some examples, the beam splitter 150 is arranged above the white ring light. The beam splitter 150 may for example be a multiband beam splitter and may in some examples be implemented by way of a dichroic mirror. The beam splitter 150 is configured for reflecting the generated light onto the test plate 200, whilst transmitting at least a part of the light originating from the test plate 200 toward the detection means 120.

The detection means 120 may comprise a photodetector, such as a CCD or CMOS device configured to convert received photons into an electric signal. The detection means 120 may in some examples be referred to as an imaging device. Further, beam shaping and filtering arrangements 115, 135, 150 for improving the quality of the illumination and the signal generated by the detection means 120 may be arranged along the optical path between the test plate 200 and the detection means 120. Changes and faults in the components arranged along the optical path may be detected by monitoring changes in the intensity of the illumination means.

The test plate 200 may be arranged on a positioning means 140 for moving the calibration plate 200 in relation to the detection means 120, thereby allowing a focus spot or field of view of the detection means 120 to be moved to different locations on the test plate 200. The positioning means 140 may, for instance, comprise a linear stage configured to move the test plate 200 in the x- and y-directions. The test plate 200 may be employed to check or monitor the performance of the positioning means 140, for example by identifying or monitoring the position of a reference structure of the test plate 200 in an image acquired by the detection means 120. The reference structure may be formed of a fiducial marker or a well. Should the position of the reference structure vary between different readings or images, there may be a problem with the operation of the positioning means which hence may need to be recalibrated or require service.

It is to be understood that the light generated by the illumination means 110, directed onto the test plate 200, and received by the detection means 120 is indicated in figure 1 by dashed lines provided with arrows.

The system 100 further comprises a processing means 130 coupled to the detection means 120 and configured to process the signal generated by the detection means 120. The processing means may also be referred to as a processing circuit, circuitry or controller and may comprise, e.g., one or more processors, an Application Specific Integrated Circuit (ASIC), a Field-Programmable Gate Array (FPGA) or the like. The processing means 130 may be employed for determining parameters indicating an intensity of the illumination means 110 as well as a focus level of the detection means 120, based on the processing of the signal output from the detection means and, optionally, previously defined reference values.

Figure 2 is a schematic top view of a test plate 200 according to an embodiment. The test plate 200 may be similarly configured as the one discussed above in connection with figure 1 and may hence be used in a similar system as the one described above.

The test plate 200 is configured to be illuminated by the illumination means 110 to allow a performance of the system 100 to be determined in a test procedure as described above. The test plate 200 comprises a first test structure 210 comprising a fluorescent material configured to emit photons in response to the fluorescent material being illuminated by the illumination means 110 and a second test structure 220 comprising a pattern (not shown) of features defining a first area with relatively high photon reflection or fluorescence (also referred to as a bright area) and a second area with relatively low photon reflection or fluorescence (also referred to as a dark area) when the pattern is illuminated by the illumination means 110. The term `relatively low fluorescence' should be understood to also encompass areas having substantially no fluorescence at all. Further, it will be appreciated that the pattern features define relatively sharp edges or transitions between the dark and bright areas to facilitate determination of focus level.

Preferably, the test plate 200 comprises a plurality of first test structures 210 and a plurality of second test structures 220 to allow the performance of the system to be verified at several different locations on the test plate 200. Hence, the test structures 210, 220 may be distributed over the test plate 200, such as in each corner of the test plate 200 as indicated in figure 2. During a calibration or performance qualification process, as well as a quality control process, the linear stage 140 moves the test plate 200 in order to position each of the test structures 210, 220 in the field of view of the detection means 120, to allow a signal indicating an intensity of the illumination means 110 and a focus level of the detection means 120 to be acquired.

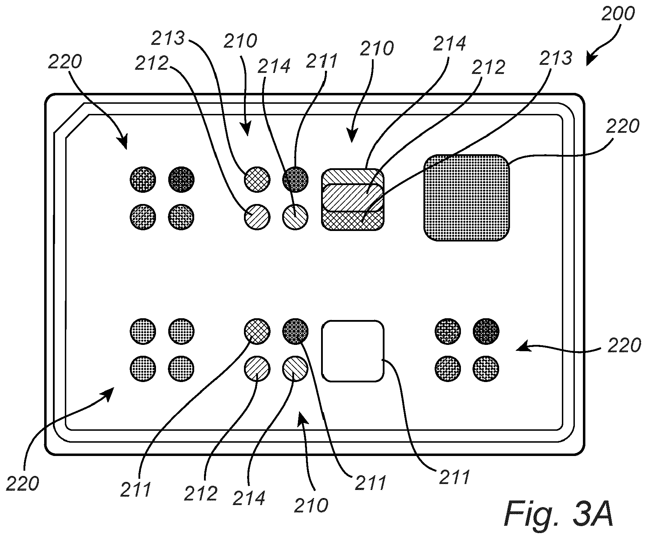

A further example of possible test structure configurations is shown in figure 3a, depicting a top view of a similar test plate 200 as the one shown in figure 2. In addition to the second test regions 220, however, the present test plate 200 comprises first test structures 210 including four regions 211, 212, 213, 214 configured to be excited by photons in different wavelength ranges, i.e., by light of (in this example) four different colours. Hence, these regions 211, 212, 213, 214 may be used to determine the intensity of an illumination means 110 comprising a plurality of light sources 111, 112, 113, 114, wherein each of the light sources may be configured to emit light of different colour, as described above in connection with figure 1.

Examples of fluorescent materials include fluorescent dyes, gemstones, fibres, and minerals. The type of material is selected depending on the desired excitation/emission peaks. It will be appreciated that the same type of fluorescent material may be used for two or more of the above-mentioned regions 211, 212, 213, 214. This may be enabled by a material that is capable of being fluorescently excited by light of different wavelengths. Hence, in an exemplifying and non-limiting embodiment, a first fluorescent material of e.g. polyamide, such as nylon, may form the first region 211, whereas a second fluorescent material, such as e.g. titanium dioxide, may form the second, third and fourth regions 212, 213, 214. The first material may thus be excited by light having a wavelength of about 640 nm, and the second material may be excited by light having a wavelength of about 380 nm, 490 nm, and 550 nm, respectively. With these two materials, light sources of four different colours, corresponding to the above wavelengths of about 380, 490, 550 and 640 nm, may be tested.

The second test structure(s) 220 may, in addition to the comprise pattern features for determining the focus level, comprise fluorescent material similar to the above. Such a second test structure 220 may hence be used also a first test structure 210. An example is shown in figure 3a, wherein some of the second test structures 220 are similar to the regions 211, 212, 213, 214, with a patterned mask layer added on top for creating bright areas emitting fluorescent light and dark areas in which the light is blocked. The mask may preferably be formed of a light blocking material, i.e., a material that is opaque to the fluorescent light, comprising through-holes or apertures defining bright pattern features of fluorescent light. In an example, low reflective chrome is used as a light blocking material and may be provided as a coating on a glass slide or a white ceramic slide.

The test plate 200 may also comprise a second test structure 220 having a material that reflects rather than being fluorescent. The reflected light may help increasing the difference in intensity of light reflected from brighter features and darker features of the pattern. Such a test structure 220 may beneficially be used for validating the performance of a white light source, such as the white ring LED mentioned above for the ELISpot reader. Examples of such a material includes white polyester and white ceramics such as compacted aluminium oxide.

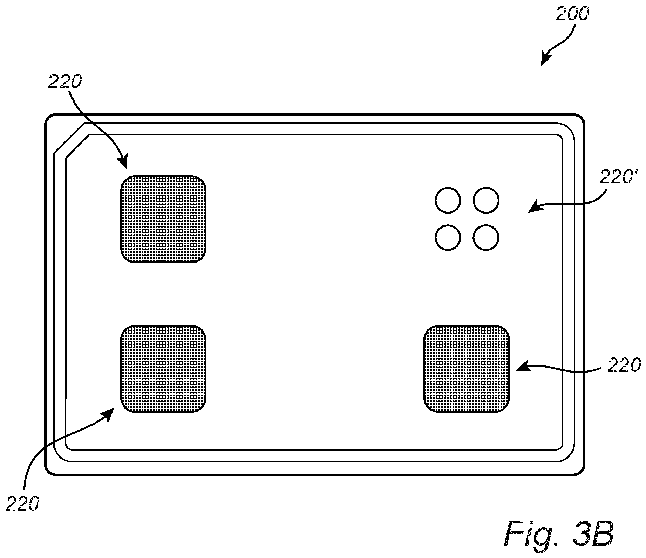

An example of such a test plate 200 for the ELISpot reader is shown in figure 3b, which may be similarly configured as the test plates 200 of figures 2 and 3a. The illustrated test plate 200 comprises a plurality of second test structures 220 that are patterned with black dots on a white reflective background. Further, the test plate 200 comprises a plurality of wells 220' with an empty, i.e., un-patterned white reflective background that can be used for validating the intensity of illumination.

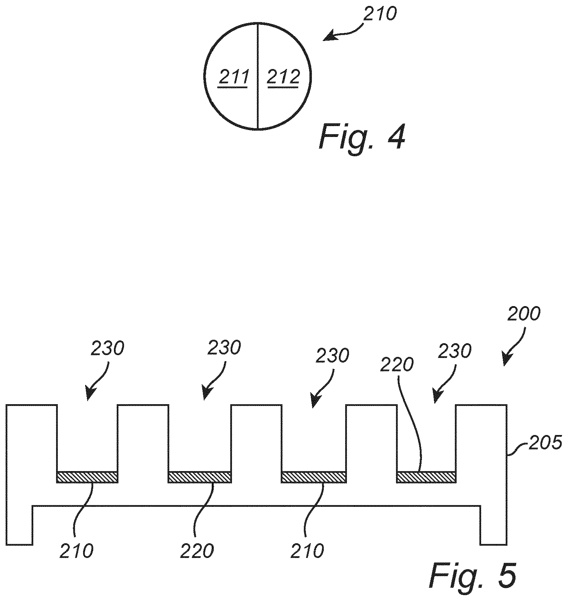

The different regions 211, 212, 213, 214 of the first test structure 210 may be arranged in separate structures, such as at the bottom of a respective well shown in figure 5. However, it will be appreciated that the inventive concept is not necessarily limited to such configurations. On the contrary, two or more of the regions 211, 212, 213, 214 may be integrated in a common structure, such as illustrated in figures 3b and 4. Figure 4 shows a first test structure 210 comprising two different fluorescent materials, of which a first one forms a first region 211 and the other one forms the second region 212. The two regions 211, 212 may be arranged in an abutting manner, such that they share a common interface and together form the complete first test structure 210 - in this example a circular disc, which can be fitted at the bottom of a well shown in figure 5. Other configurations are however equally possible, including various geometrical shapes and combinations of fluorescent materials.

As already mentioned, the first and/or second test structures 210, 220 may be arranged at the bottom of wells formed in the test plate 200. An example of such a configuration is shown in figure 5, schematically illustrating a cross section of a test plate 200 according to an embodiment which may be similar to the test plates 200 shown in figures 1-4. The test plate 200 may comprise a frame structure 205, in which a plurality of indentations or wells 230 may be formed. The first and second test structures 210, 220 may be arranged at the bottom of one or several of these wells 230, and the test plate 200 may hence be similar to a multi-well plate commonly associated with the ELISpot and FluoroSpot assays.

Various configurations are conceivable. In an example, the multi-well test plate 200 comprises the number of wells 230 needed for accommodating the test structures 210, 220 only, and no further wells 230. Alternatively, the multi-well test plate 200 comprises the same number of wells as a regular ELISpot or FluoroSpot assay plates, of which some or all are provided with the test structures 210, 220. Further, a well 230 may comprise a single test structure 210, 220, such as a first or a second test structure 210, 220, or a combination of both. Put differently, the first and second test structures 210, 220 may be arranged in a common well 230 or in separate wells 230. A well 230 comprising a first test structure 210 may further comprise two or more regions 211, 212, 212 as discussed above in connection with figure 4.

The first test structure may comprise one or several fluorescent materials, which may be provided as a layer, substrate, or a film on the test plate 200.

Figure 6a is a top view of a second test structure 220, which may be similarly configured as the second test structures discussed above in connection with any of the previous figures. The test structure 220 comprises a pattern of features configured to generate an intensity difference in light reflected from bright and dark areas of the second test structure 220. The second test structure 220 may, for example, comprise black pattern features 221 arranged on a white background 222, or vice versa, separated by a sharp transition or edge. In the present example the pattern features 221 are formed as circular discs. It will however be appreciated that other shapes and structures may be used as well, and that the circular discs shown in the present example may be chosen due to their relatively easy manufacturing. In order to promote a relatively high contrast between brighter and darker areas in an image representing the second test structure 220, it may be beneficial if the pattern features 221 are formed of a material having a relatively high reflectance of light and the background 222 of a material having a relatively low reflectance of light (or vice versa: pattern features 221 of relatively low reflectance and a background of relatively high reflectance).

The pattern of the second test structure 220 may, for instance, be formed by means of a patterned mask 222 arranged above an underlying material layer 223, as shown in the cross section in figure 6b. In this example, a material layer 223 of a relatively high reflectance (or fluorescence) may be covered by a mask layer 222 having apertures selectively exposing the underlying material layer 223 to light from the illumination means 110. Preferably, the mask layer 222 is formed of an opaque material having a relatively low reflectance. Alternatively, an inversed pattern is formed by a highly reflecting (or fluorescing) mask layer 222 selectively exposing an underlying `black' layer 223 of a lowly reflecting (or fluorescing) material.

The mask layer 222 may, for example, be formed by a thin low reflective opaque chrome coating on top of a light reflective material. In further alternative, the pattern is formed by opaque dots 221 on a white background 222. Preferably, the coating, or mask layer 222, is relatively thin so as to provide sharp edges. The thickness may hence be less than 1 µm, such as less than 500 nm, such as in the range of 100-200 nm.

As already mentioned, it will be appreciated that the pattern features 221 shown in figures 6a and b may be formed of a fluorescent material as well, such as any of the ones discussed above for the previous embodiments, and that the background 222 may be formed of a material having a very low or no fluorescence. This may be referred to as a positive pattern, in which the highest intensity of reflected or emitted light originates from the pattern features 221. Alternative configurations are however possible, comprising a negative pattern in which the highest intensity of reflected or emitted light originates from the background 222 rather than the pattern features 221.

The above-described second test structure 220 may hence be used to generate a contrast between brighter and darker areas of an image of the test structure 220. The contrast, and the edge defining the transition between the two areas, may in turn be used to determine or at least indicate a focus level of the detection means 120, such as a camera, imaging the test structure 220. There are numerous ways known in the art to evaluate or determine focus level in an image, of which the so-called blur effect approach is one. The blur effect approach involves analysing the degree to which the image of the test structure 220 is out of focus by calculating the amount of blur present in the image. One approach is to calculate how the variance of the intensity values of neighbouring pixels in the image is affected by a blur filter, as this can provide a good measure of the amount of blur present. Other techniques include using image filters to detect edges or other high frequency content and using machine learning algorithms to classify the level of blur. A possible implementation is the no-reference perceptual blur metric proposed by F. Crete et al. in The Blur Effect: Perception and Estimation with a New No-Reference Perceptual Blur Metric *In Proceedings of SPIE* - *The International Society for Optical Engineering,* March 2007. The pattern features 221 of the second test structure 210 may hence be configured to provide the edges or high frequency content necessary to efficiently determine the level of blur and thereby provide an indication of the focus level of the detection means 120 of the reader. The focus level may be determined as an absolute value or as a relative value and may either be compared to a previously defined value or monitored over time to detect drifts. Should the focus level be determined to lie outside a given tolerance interval, a warning signal may be triggered to notify the operator or indicate a potential malfunctioning of the system.

A similar approach may be applied to the intensity of the illumination means 110, which may be determined in absolute terms or as a relative value. Thus, by either comparing the determined intensity to a reference value or monitoring any variations over time, a potential fading of a light source may be detected and addressed.

Figure 7 is a flowchart schematically outlining a method for testing a system similar to the one disclosed in figure 1. The method is performed using a test plate 200 which may be similarly configured as the embodiments described with reference to figures 2-6b.

The method 300 may, according to the present embodiment, comprise a first act of inserting 310 the test plate 200 into the reader. The test plate 200 may preferably have a similar design and similar dimensions as the regular multi-well assay plates used in the ELISpot or FluoroSpot assays. To initiate the validation of the performance of the reader, and more specifically the position of the detection means 120 (in terms of focus level) and the intensity of the light generated by the illumination means 110, the test plate 200 is illuminated 320 by the illumination means 110. This step typically includes illuminating a first test structure 210 to excite a fluorescent material and cause it to emit light that can be captured 332 by the detection means 120. The intensity of the captured light may then be compared 342 with a reference value, which either may be specific for the particular light source that is being investigated or determined from previous measurements. If a difference between the intensity of the captured light and the reference value exceeds a predetermined threshold, this may be interpreted by the processing as a malfunctioning of the illumination means, whereby the processing means may generate 360 a warning signal alerting an operator.

The step of illuminating 320 the test plate 200 may also include to illuminate a second test structure 220, comprising a pattern that is imaged 334 by the detection means 120. The pattern typically comprises edges or other high frequency contents that can be used to determine 344 a focus level of the detection means 120. The focus level may typically be determined 344 by means of image processing of the captured image. The image processing may, for instance, employ the above-described blur effect approach to determine a blur metrics. The blur metrics, which hence may be an example of a parameter indicating the focus level, may then be compared 354 with a reference value in a similar way as for the intensity level. Hence, the determined parameter may be compared with a reference value which either may be specific for the particular reader or test plate 200 or determined from previous measurements to detect a drift in focus over time. If a difference between the determined parameter and the reference value exceeds a predetermined threshold, a warning signal may be generated 360 to alert the operator of a potential malfunctioning of the reader.

The above embodiments are to be understood as illustrative examples of the invention. Further embodiments of the invention are envisaged. For example, it will be appreciated that the inventive concept is not necessarily limited to the ELISpot or FluoroSpot assays. It may as well be implemented in other types of assays in which spots or other visible features are quantified or qualified by means of image processing. Further, the test plate and its corresponding test structures for evaluating focus and illumination intensity may be configured in many different ways, depending on type of application. The first and second test structures may hence not necessarily be limited to circular discs arranged at the bottom of a well. On the contrary, other geometries and shapes are also possible within the scope of the appended claims. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A system (100) for detecting spots in a substrate, wherein the spots indicate analyte-secreting cells of a sample, the system comprising:
illumination means (110) for illuminating the substrate;
detection means (120) for detecting photons emitted or reflected from the illuminated substrate;
processing means (130) coupled to the detection means and configured to detect the spots in the substrate based on the photons detected by the detection means; and
a test plate (200) configured to be illuminated by the illumination means to allow a performance of the system to be determined;
wherein the test plate comprises:
a first test structure (210) comprising a fluorescent material configured to emit photons in response to the fluorescent material being illuminated by the illumination means; and
a second test structure (220) comprising a pattern of features defining a first area with relatively high photon reflection or fluorescence and a second area with relatively low photon reflection or fluorescence;
wherein the processing means is configured to:
determine a parameter indicating an intensity of the illumination means based on detected photons emitted by the fluorescent material, and
determine a parameter indicating a focus level of the detection means based on detected photons reflected or emitted by the pattern, as well as a on transition between the first area and the second area.

2. The system according to claim 1, wherein the test plate comprises a plurality of wells (230) arranged in a frame (205), and wherein the first and the second test structure are arranged at a bottom of a respective well.

3. The system according to claim 1, wherein the test plate comprises a plurality of wells (230) arranged in a frame (205), and wherein the first and the second test structure are arranged in a common well.

4. The system according to any of the preceding claims, wherein the processing means is configured to determine the parameter indicating the intensity of the illumination means by comparing an intensity of photons emitted by the fluorescent material with a reference value.

5. The system according to any of the preceding claims, wherein the processing means is configured to determine the parameter indicating the focus level of the detection means by comparing an intensity variation between neighbouring pixels of an image with a reference value.

6. The system according to any of the preceding claims, wherein the first test structure comprises a first region (211) configured to emit photons in a first wavelength range and a second region (212) configured to emit photons of a second wavelength range, different from the first wavelength range, and wherein the illumination means comprises a first light source (111) and a second light source (112), wherein the first light source is configured to emit light in a wavelength range differing from the wavelength range of the second light source.

7. The system according to any of the preceding claims, wherein the detection means comprises a fixed-focus camera.

8. The system according to any of the preceding claims, further comprising a positioning means (140) configured to move the test plate in relation to the detection means, thereby allowing a focus spot of the detection means to different locations on the test plate.

9. A test plate (200) for determining a performance of a device for detecting spots in a substrate, wherein the spots indicate analyte-secreting cells of a sample, and wherein the device comprises illumination means for illuminating the substrate, detection means for detecting photons emitted or reflected from the substrate, and a processing means coupled to the detection means, wherein the processing means is configured to detect the spots in the substrate based on the photons detected by the detection means, the test plate comprising:
a first test structure (210) comprising a fluorescent material configured to emit photons in response to the fluorescent material being illuminated by the illumination means, thereby allowing the processing means to determine a parameter indicating an intensity of the illumination means; and
a second test structure (220) comprising a pattern of features defining a first area with relatively high photon reflection or fluorescence and a second area with relatively low photon reflection or fluorescence, thereby allowing the processing means to determine a parameter indicating a focus level of the detection means based on detected photons reflected or emitted by the pattern, as well as on a transition between the first area and the second area.

10. The test plate according to claim 9, comprising a plurality of wells (230), and wherein the first and the second test structure are arranged at a bottom of a respective well.

11. The test plate according to claim 9, comprising a plurality of wells arranged in a frame (205), and wherein the first and the second test structure are arranged in a common well.

12. The test plate according to any of claims 9-11, wherein the first test structure comprises a first region (211) configured to emit photons in a first wavelength range and a second region (212) configured to emit photons of a second wavelength range, different from the first wavelength range.

13. The test plate according to claim 12, wherein the first region is arranged at the bottom of a first well and the second region is arranged at the bottom of a second well.

14. The test plate according to any of claims 9-13, wherein the pattern of the second test structure is formed by a mask (222) comprising a pattern exposing an underlying surface (223) to light emitted by the illumination means.

15. The test plate according to any of claims 9-14, wherein the pattern comprises white features arranged on a black background or black features arranged on a white background.
